# EUROPEAN PATENT SPECIFICATION

(11) **EP 1 505 015 B1**
(45) Date of publication and mention of the grant of the patent: **11.03.2009**
(21) Application number: 04077216.2
(22) Date of filing: 02.08.2004
(51) Int. Cl.: B65G 47/96

(54) **Device for conveying products**
Fördervorrichtung für Gegenstände
Dispositif de transport d'objets

(30) Priority: 04.08.2003 NL 1024034
(43) Date of publication of application: 09.02.2005
(73) Proprietor: VANDERLANDE INDUSTRIES NEDERLAND B.V., 5466 RB Veghel (NL)
(72) Inventor: Berkers, Antonius Johannes Hendricus, 5591 EP Heeze (NL); van de Plassche, Evert Johan, 3901 RA Veenendaal (NL)
(74) Representative: Dorna, Peter

(56) References cited:
- EP-A- 0 742 165
- WO-A-00/32502
- US-A- 3 662 906
- US-A- 3 955 678
- US-B1- 6 360 868

## Description

The invention relates to a device for sorting products while they are being conveyed in a direction of transport, said device comprising a conveyor which is movable along an endless conveying path, which conveyor comprises a number of conveying units, each comprising an undercarriage and at least one load-carrying element connected to the undercarriage for supporting products, wherein at least some of the load-carrying elements are movable with respect to the associated undercarriage for loading and/or unloading products onto/from the load-carrying elements, and wherein at least some of the undercarriages are coupled together.

Such devices are known in various embodiment thereof, they are used in particular for sorting products. To that end, the movement of the movable load-carrying elements can be activated by a control system at several delivery positions along the conveying path while a conveying unit moves past such a delivery position, so that the products are discharged sideways from the conveyor at the delivery positions in question and can thus be sorted. Important embodiments of such sorting devices are cross-belt sorters and tilting tray sorters, examples of which are disclosed in European patent applications EP 990 604 A1 and EP 960 838 A1, respectively. With sorting devices of the former type, the movable load-carrying element is formed by a conveyor belt which extends transversely to the conveying path, whereas the movable load-carrying element of sorting devices of the latter type is formed by a load-carrying tray which is tiltable about an axis of tilt that extends parallel to the conveying path. In addition to that there are load-carrying elements of the bomb hatch type, which comprise a load-carrying plate that can tilt downwards, so that a product present on the load-carrying plate is discharged through an opening thus formed. Within the framework of the present invention, load-carrying elements being movable with respect to the associated undercarriage are to be understood to include at least load-carrying elements comprising a supporting surface along which a pusher element associated with the conveying unit in question, which thus moves along in the direction of transport, can be moved for pushing a product off the supporting surface. It is furthermore noted that in principle any load-carrying elements that are not movable with respect to the associated undercarriages need not be actually utilized for supporting products, and in fact even need not be suitable for that purpose in that case. Such load-carrying elements might only serve to fill the gap between two load-carrying elements that are actually movable with respect to the associated undercarriages.

Such sorting devices, in particular modern embodiments thereof, are highly suitable for sorting products at high speeds and a high capacity. On the other hand, such sorting device require considerable investments, in particular because of the means that are required for each conveying unit to enable the movement of said at least one associated load-carrying element. Such means comprise, among other things, driving means such as an electric motor, means for supplying energy to such driving means, whether or not in a contactless manner, and/or any mechanisms that may be required, such as camway systems.

Another aspect that plays a part when using such sorting devices is the fact that for logistic reasons and reasons generally relating to the layout, the length of the conveying path can usually be considered to be a given, for example because of the number of discharge locations that are required. This implies that the capacity of the sorting devices that his actually utilised is usually smaller than the capacity that would be technically achievable with the sorting devices being used, so that there is some overcapacity. As a result, "vacant" load-carrying elements will be encountered, or the speed at which the conveyor moves in the direction of transport is lower than the speed that is possible according to the specifications of the sorting device. On the other hand, in the situation in which the capacity of the sorting device is actually utilised to its full extent, the actual capacity can only be changed, more particularly be increased, to a limited extent, or not at all, at a later stage, if the need for that should arise in the course of time.

In addition to that, the use of movable load-carrying elements for sorting products is not required for all sorting applications, and cheaper sorting means, such as pusher mechanisms arranged along the sorting path that push products sideways off a supporting surface, could be quite satisfactory for these applications. An example of such a pusher mechanism is described in US patent No. 6,220,422 B1. In addition to that, depending on factors such as the nature of the products to be sorted and the desired sorting speed, movable load-carrying elements of one type are preferred for one application and movable load-carrying elements of the other type may be preferred for other applications for technical or economic reasons.

In International patent application WO-A1-00/32502 a sorting device is described with reference to figure 15 thereof in which conveying units 102 are used which are each provided with a cross conveyor belt 103. Two of the conveying units 102 abut one another laterally, in contrast to the other conveying units 102.

The International patent application discloses furthermore on figure 18 a sorting device according to the preamble of claim 1, wherein the space between two contiguous conveyor units 102 provided with cross-belts 103 is covered by a not movable flexible body 141.

US patent No. 3,662,906 describes a conveying system which employs interconnected carrier carts 4 having side walls 14, which are oriented transversely to the direction of movement and which can be swung down so as to form a common supporting surface with an adjacent cart. All carts 4 are of identical construction.

The object of the invention is to provide a device as referred to in the introduction which, whether in preferred embodiments of the invention or not, complies with the precondition to compose an optimum configuration of a device as referred to in the introduction whilst providing a greater degree of flexibility as regards the cost of investment, the sorting capacity and the manner in which sorting takes place. The object of the invention is achieved by the sorting device of claim 1. By using mutually different load-carrying elements within a train of conveying units, the intended flexibility is achieved.

The term non-movable load-carrying element as used within the framework of the present invention is to be understood to mean a load-carrying element which is not movable in such a manner that the possible (limited) movability of the load-carrying element makes it possible to move a product off the associated conveying unit. It will be understood that the term "non-movable load-carrying element" certainly includes load-carrying elements which are rigidly connected to the associated undercarriages. Due to the use of non-movable load-carrying elements, which will naturally be considerably cheaper than movable load-carrying elements, it will sooner be economically sound to invest in devices comprising movable as well as non-movable load-carrying elements, or the cost of investment can be recovered sooner, because the sorting capacity that is to be installed can be geared more adequately to the required sorting capacity. Overcapacity is thus prevented, so that the cost of investment will not run up needlessly. In addition, the use of non-movable load-carrying elements makes it possible to continue the pattern of (movable) load-carrying elements, in spite of the fact that a smaller number of conveying units comprising movable load-carrying elements are used than required for filling the entire conveying path or a desired part thereof with load-carrying elements, as a result of which there will be no undesirable "gaps" in the conveyor as regards the load-carrying elements.

Very suitable embodiments of devices according to the invention can be obtained if the movable load-carrying elements are capable either of tilting movement about at least one axis of tilt with respect to the associated undercarriages or of translating movement in a direction of translation with respect to the associated undercarriages.

In order to make it possible at a later stage to change the sorting capacity of a device according to the invention as regards the quality and in particular the quantity, which in practice will generally imply increasing the capacity, it is strongly preferred that undercarriages associated with the load-carrying elements of both the first and the second number of load-carrying elements are provided with connecting means suitable for providing a connection with load-carrying elements of both the first and the second number of load-carrying elements. If the need for a larger or different capacity should arise in the course of time, this need can be met in a relatively simple manner by exchanging load-carrying elements of the first number of load-carrying elements for load-carrying elements of the second number of load-carrying elements, or vice versa, which is in principle possible without exchanging the associated undercarriages in the present preferred embodiment, as a result of which this can take place relatively quickly and at relatively low cost. More specifically, one could imagine in this case that non-movable load-carrying elements are exchanged for movable load-carrying elements, or that movable load-carrying elements of a first type are exchanged for movable load-carrying elements of the second type.

In another preferred embodiment, the load-carrying elements of the first number of load-carrying elements have a length, seen in the direction of transport, which is different from the length of the load-carrying elements of the second number of load-carrying elements. Thus the device according to the invention can be made suitable for conveying and sorting products of varying dimensions without there being a need to have relatively large products supported by two or more load-carrying elements arranged adjacently to each other.

It may be advantageous in this connection if undercarriages associated with load-carrying elements of the first number of load-carrying elements have a length, seen in the direction of transport, which is different from the length of undercarriages associated with load-carrying elements of the second number of load-carrying elements. Thus undercarriages of different length are used, which, depending on several factors, might further reduce the cost price of the device according to the invention.

The length of undercarriages associated with load-carrying elements of the first number of load-carrying elements is preferably a multitude of the length of undercarriages associated with load-carrying elements of the second number of load-carrying elements. This achieves that exchanging a relatively long undercarriage for two or more short undercarriages, or vice versa, will have no effect on the overall length of the conveyor.

The latter advantage in particular applies if the length of the conveyor at least substantially corresponds to the length of the endless conveying path. In this connection an endless conveyor may be considered, or a conveyor whose head and tail are positioned relatively close together.

For control reasons it is generally preferred that load-carrying elements of the first number of load-carrying elements and load-carrying elements of the second number of load-carrying elements are distributed in a regular pattern over the length of the conveyor.

For manually operating a device according to the invention, in which products are manually placed onto a load-carrying element, it will generally be advantageous if load-carrying elements of the first number of load-carrying elements and load-carrying elements of the second number of load-carrying elements are alternately arranged in the conveyor.

When a device according to the invention is operated in an automated manner, on the other hand, it will generally be advantageous if load-carrying elements of the first number of load-carrying elements and load-carrying elements of the second number of load-carrying elements are arranged in groups in the conveyor. With such an automated system, the supply of products to the load-carrying elements will take place in an automated manner, usually by means of the supply conveyor.

To prevent gaps being formed between adjacent load-carrying elements, into which gaps products or parts thereof might find their way, which might interfere with the operation of the device according to the invention, it is advantageous if load-carrying elements of the first number of load-carrying elements and load-carrying elements of the second number of load-carrying elements arranged adjacently to each other form a closed common supporting surface also when passing through bends.

More specifically, it is advantageous in that connection if load-carrying elements of the first number of load-carrying elements and load-carrying elements of the second number of load-carrying elements arranged adjacently to each other abut against each other. An example of such abutment is described in European patent application EP 960 838 A1, albeit that only (one type of) tilting tray load-carrying elements are used therein, this in contrast to the present invention.

In order to make it possible in a constructionally simple manner for adjacent load-carrying elements to form a closed common supporting surface also when passing through bends, load-carrying elements arranged adjacently to each other preferably have complementally curved edges on their facing sides.

Alternatively, or in combination therewith, it is also possible, in order to prevent gaps or the like, to provide bridging means between adjacent load-carrying elements, more in particular between load-carrying elements of the first number of load-carrying elements and load-carrying elements of the second number of load-carrying elements, for bridging a distance between said adjacent load-carrying elements.

Preferably, such bridging means comprise a harmonica-like element, as a result of which it is no longer necessary to use elastic materials, for example.

Alternatively, or in combination therewith, adjacent load-carrying elements may furthermore partially overlap. Thus the formation of gaps or the like between adjacent load-carrying elements can be prevented in a constructionally very simple manner.

The invention is also based on the perception that non-movable load-carrying elements can be used not only to fill the space between movable load-carrying elements, but that is also possible to use the conveying units associated with the non-movable load-carrying elements for sorting products, to which end moving means are preferably provided along the conveying path for moving a product off a load-carrying element. Such moving means are well-known, in all kinds of the embodiments thereof, to those skilled in the art. By way of illustration reference may be made to the content of US patent No. 6,220,422 B1.

According to a very practical embodiment, a supply station is provided for supplying products to the conveyor after said products have been moved off a load-carrying element, preferably by the aforesaid moving means. It is thus possible to carry out manual operations on the product in the mean time, and subsequently place said product back onto a movable or a non-movable load-carrying element, which may or may not be done manually. Such an operation might for example consist of taking a product out of its package, said product possibly being a sub-package containing an article and said package being a so-called outer box.

The invention will be explained in more detail hereinafter by means of a description of a number of preferred embodiments of devices according to the invention, in which a reference is made to the following figures.
Figure 1 is a schematic top plan view of a first embodiment of a device according to the invention;
Figure 2 is a schematic top plan view of a second embodiment of a device according to the invention;
Figure 3 is a schematic top plan view of a third embodiment of a device according to the invention;
Figure 4 is a schematic side elevation of a conveying unit comprising two cross conveyor belts;
Figure 5 is a schematic side elevation of a conveying unit comprising a non-movable load-carrying element;
Figure 6a is a schematic top plan view of three conveying units shown in the left-hand bend of figure 1;
Figure 6b is a schematic sectional view along the line VIb-VIb in figure 6a;
Figure 7a is a schematic top plan view of three conveying units shown in the right-hand bend of figure 1;
Figure 7b is a schematic sectional view along the line VIIb-VIIb in figure 7;
Figure 8 is a schematic top plan view of a fourth embodiment of a device according to the invention;
Figure 9a is a schematic side elevation of a conveying unit as used in the fourth embodiment as shown in figure 8;
Figure 9b shows figure 9a in side elevation;
Figure 10a is a schematic top plan view of a part of the conveying units that form part of the fourth embodiment as shown in figure 8;
Figure 10b shows figure 10a in side elevation;
Figure 11 is a schematic top plan view of a fifth embodiment of a device according to the invention;
Figure 12 is a schematic top plan view of a sixth embodiment of a device according to the invention.

Like parts are indicated by the same numerals in the various preferred embodiments.

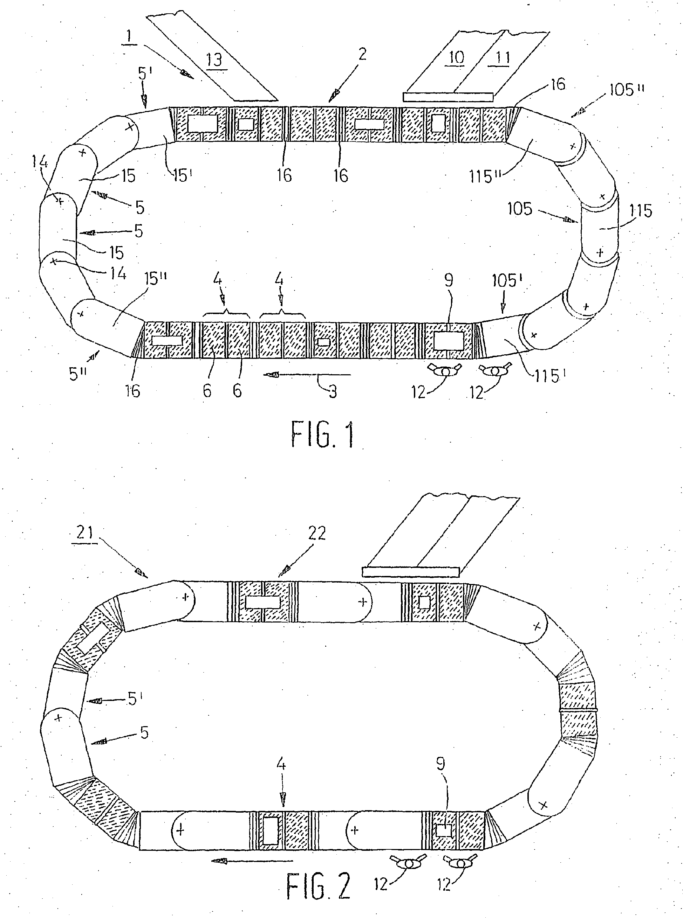

Figure 1 schematically shows a sorting device 1 comprising an endless conveyor 2, which is movable in a direction of movement 3 along a conveying path that extends along two 180° bend sections, which are connected by straight sections. The conveyor 2 is built up of a number of active conveying units 4 and passive conveying units 5, 105, which are pivotally interconnected to form an endless train. Both with regard to the present preferred embodiment and with regard to the preferred embodiments yet to be discussed hereinafter, the term active conveying units is to be understood to mean conveying units comprising an undercarriage and at least one associated load-carrying element, which is movable with respect to the undercarriage, whilst the term passive conveying elements is to be understood to mean conveying units comprising an undercarriage and at least one associated load-carrying element, which is not movable with respect to the undercarriage. In figures 1, 2, 3, 8, 11 and 12 the difference between active conveying units and passive conveying units is indicated by the presence or absence of shaded parts.

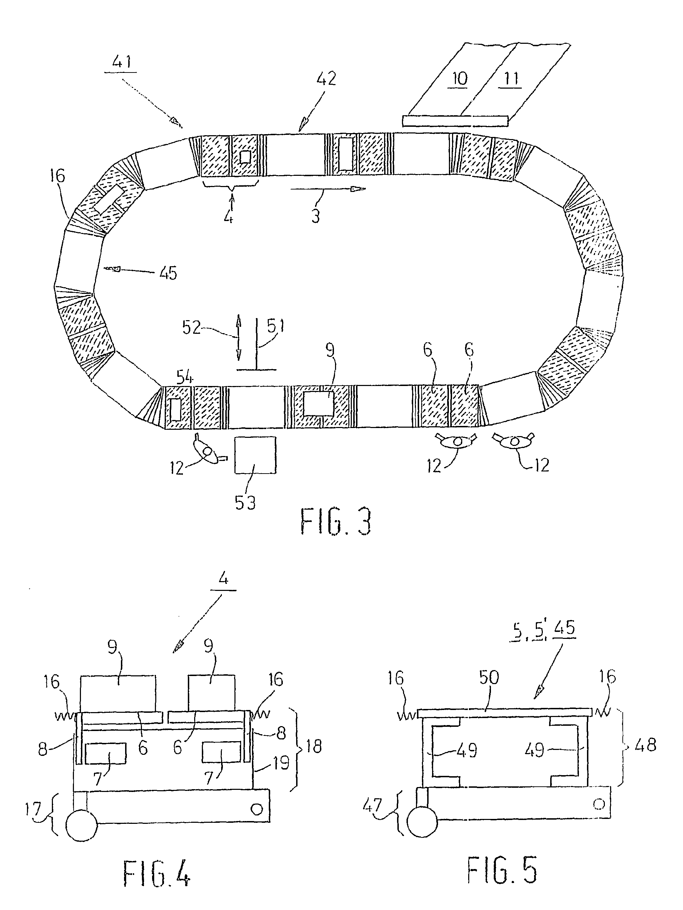

The active conveying units 4 comprise two cross conveyor belts 6 for each conveying unit 4 (also referred to figure 4) as well as two electric motors 7, which can drive each individual cross conveyor belt 6 in two directions, via transmission belts 8, for moving products 9 present on by the cross conveyor belt 6 in lateral direction with respect to the conveying path. Thus it is possible to move said products 9 in a direction away from the conveyor 2, for example into the discharge chutes 10 or 11 that extend in forward direction from the conveying path, at an angle thereto. Said products 9 are manually supplied by operators 12, who place the products 9 onto the belt conveyors 6 by hand. Depending on the dimensions of the product 9, said products can either be placed on one cross conveyor belt 6 or on a number of cross conveyor belts 6. Within the framework of the invention, the supply of products 9 can also take place in a fully mechanised manner via a supply conveyor, such as the supply conveyor 13, which joins the conveyor 2 at an angle in the direction of transport 3.

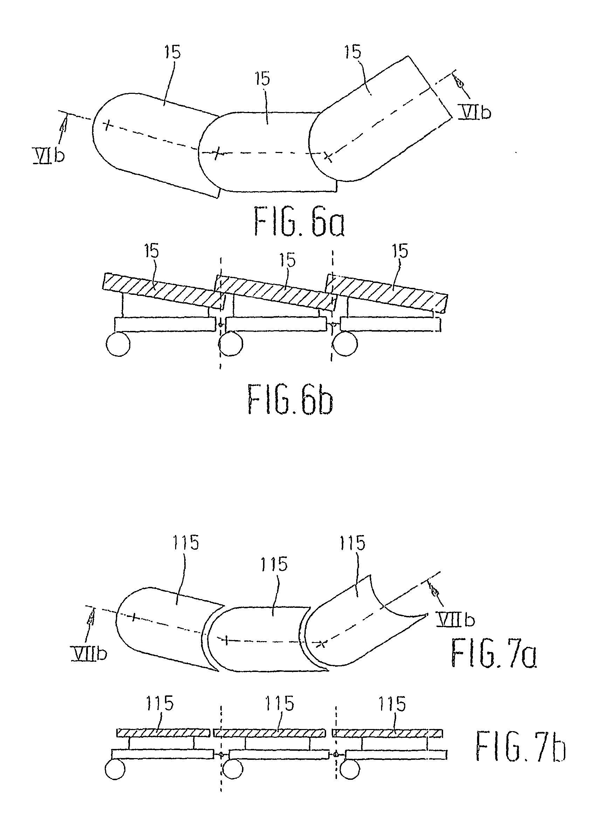

The passive conveying units 5, 105 are of considerably simpler construction, and instead of the cross conveyor belts 6 of the active conveying units 4, the passive conveying units comprise a plate 15, 115 which, insofar as another passive conveying unit 5, 105 is present ahead of the passive conveying unit 5, 105 in question, has a rounded front side (seen in the direction of transport 3). The plates 15 overlap with the plate 15 of the next passive conveying unit 5 at the location of the rounded front side, and they are pivotally interconnected by means of the pivot 14 (also refer to figures 6a and 6b). Purely by way of illustration, the conveying units 105 present in the right-hand bend of Fig. 1 are shown to be differently shaped, in the sense that there is no overlap but that the plates 115 of conveying units 105 positioned ahead of a plate 115 having a rounded front side also have a complementally rounded rear side, as a result of which the plates 115 form a closed whole in the bend as well, not counting the limited gap between adjacent plates 115 (also refer to figures 7a and 7b).

The passive conveying units 5, 105, which bound an active conveying unit 4 at their front sides (seen in the direction of transport 3), are indicated by numerals 5' and 105', respectively; at their front sides, they are not rounded, unlike the passive conveying units 5, 105. The plates 15'', 115'' associated with the passive conveying unit 5'', 105'', respectively, which are located directly ahead of an active conveying unit 4, have a straight rear side, unlike the rear side of the plates 115, 115' in the right-hand bend.

The active conveying units 4 as well as the passive conveying units 5 are incorporated in the conveyor 2 in groups consisting of six units. Such an arrangement in groups has advantages in particular when products 9 are supplied in an automated manner, for example by means of the supply conveyor 13.

Bridging elements in the form of bellows 16 are provided between active conveying units 4 arranged adjacently to each other. Such bellows 16 are also present between active conveying units 4 and adjacent passive conveying units 5', 5'', 105', 105''. The bellows 16 are capable of bridging a gap between the adjacent conveying units in question, so that no space into which products or other objects may find their way will form there between.

The conveyors 22, 42 of the sorting devices 21 and 41 as shown in figures 2 and 3, respectively, are different in particular from the conveyor 2 of the sorting device 1 as regards the manner in which the active conveying units 4 and the passive conveying units 5, 5', 45 are arranged relative to each other. In the conveyor 22, one active conveying unit 4 and two passive conveying units 5, 5' are alternately provided, whereas the conveyor 42 comprises one active conveying unit 4 and one passive conveying unit 45 arranged in alternating relationship. In addition to that, the passive conveying units 45 do not overlap an adjacent conveying unit, for the very reason that they are not arranged adjacently to another passive conveying unit 45, but are connected thereto by means of bellows 16. The regular distribution pattern according to figures 2 and 3, in which a single active conveying unit 4 is present between the respective passive conveying units 5, 5', 45, is suitable in particular for the situation in which the placement of products 9 onto the cross conveyor belts 6 of the active conveying units 4 only takes place manually by operators 12.

Figure 5 schematically shows a passive conveying unit 5, 5', 45 in side elevation. Upon comparison of the active conveying unit 4 of Fig. 4 with the passive conveying unit 5, 5', 45 according to figure 5 it becomes apparent that the respective undercarriages 17, 47 of the active conveying unit 4 and the passive conveying unit 45 are exactly identical, and that the difference between the active conveying unit 4 and the passive conveying 5, 5', 45 only resides in the upper structure 18, 48 thereof. In addition to a supporting frame 19, the upper structure 18 inter alia comprises the cross conveyor belts 6 as described above, as well as the associated electric motors 7 and the transmission units 8, whilst the upper structure 48 only comprises two legs 49, on which a cover plate 15 is present.

To extend the capacity of the sorting device 41 it therefore suffices to substitute the upper structure 48 of the passive conveying units 45 for the upper structure 18 of an active conveying unit 4. To that end the undercarriages 17, 47 are provided with means (not shown in detail) such as brackets that make it possible to mount both the upper structure 48 and the upper structure 18 thereon, which means may in principle differ from each other. To extend the sorting capacity of the sorting device according to the invention it is alternatively also possible to substitute a complete passive conveying unit 5, 5', 45 for a complete active conveying unit 4.

Figure 3 schematically shows an optional pusher element 51, which can be moved to and from as indicated by the double arrow 52 for pushing a product 9 off a conveying unit 4, 45 onto a table 53. Positioned downstream of the table 53 is an operator, who on the one hand can carry out operations on the product 9 pushed onto the table 53 by the pusher element 51, for example unpack it or provide it with a bar code containing information about the destination of the product 9, after which said operator 12 can place the product 9 in question back onto the belt conveyor 42 at the location indicated at 54.

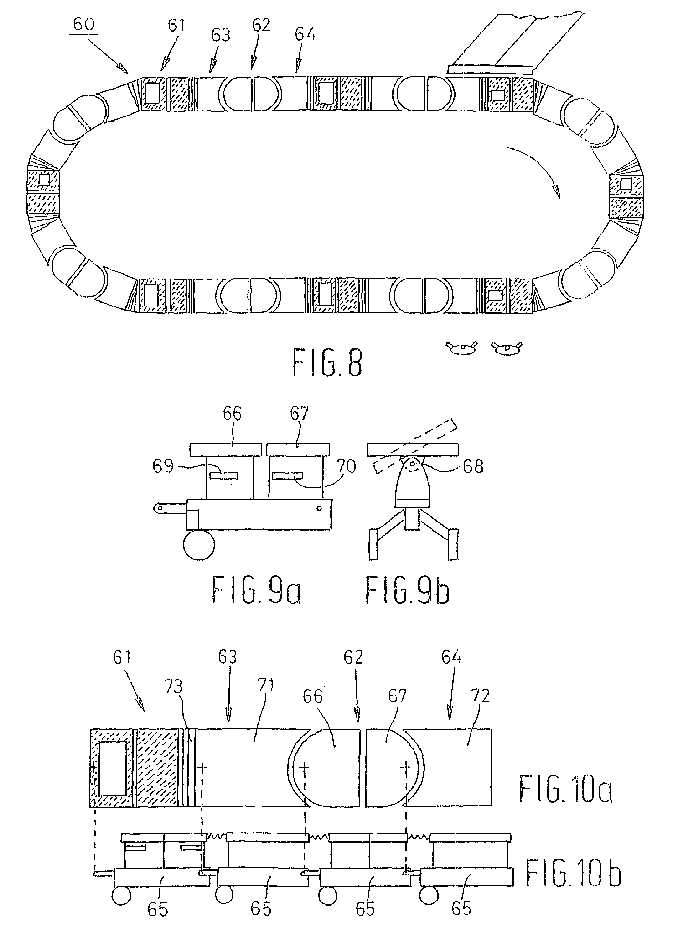

Figure 8 shows a fourth embodiment of a sorting device 60 according to the invention. Details are shown in figures 9a-10b. The sorting device 60 comprises active conveying units 61, 62 and passive conveying units 63, 64 provided therebetween. The conveying units 61, 62, 63, 64 each comprise an undercarriage 65, which is the same for all conveying units 61, 62, 63, 64. The active conveying unit 61 comprises two parallel cross conveyor belts, and in that sense it is fully comparable with the active conveying units 4 of figure 1. The active conveying unit 62 comprises two tilting plates 66, 67, which can rotate jointly as well as individually about their axis of tilt 68, which extends parallel to the direction of transport. As a result of said tilting, any products that are present on the tilting plates 66, 67 will slide off said plates. The two tilting plates 66, 67 are supported in pairs on an undercarriage 65, and a separate electric motor 69, 70 is provided for each tilting plate 66, 67 for the purpose of tilting said plates. On their sides facing towards each other, the tilting plates 66, 67 have a straight circumferential edge, whereas the tilting plates 66, 67 have a semicircular circumferential edge on the sides that face away from each other.

The passive conveying units 63, 64 comprise load-carrying plates 71, 72 that are rigidly connected with the associated undercarriage 65. The circumferential edge of the load-carrying plates 71, 72 is straight on the side facing towards the active conveying units 61, whereas said circumferential edge is arched on the side facing towards the active conveying units 62, so that the shape of the circumferential edge at that location conforms to the shape of the circumferential edge of the tilting plates 66, 67, so as to provide a substantially closed supporting surface also while moving through bends. A similar effect is achieved between the active conveying units on the one hand and the passive conveying units 63, 64 on the other hand, in that a bellows 73 is used between said conveying units.

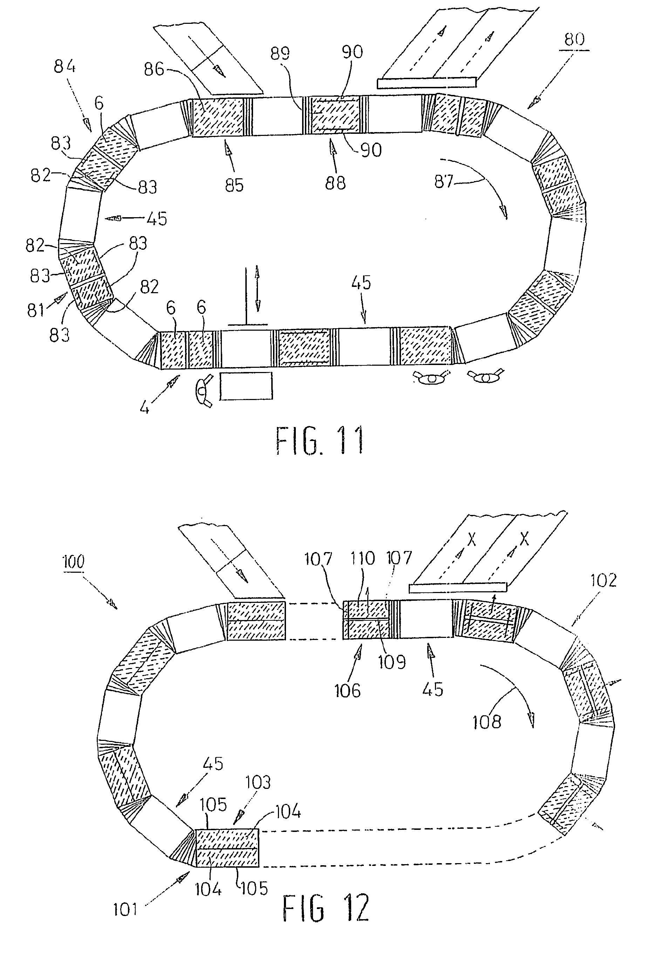

The sorting device 80 (figure 11) comprises alternately arranged passive conveying units 45 and active conveying units. Apart from the fact that the active conveying units are generally of a type different from that of the passive conveying units 45, the active conveying units are also of mutually different types. In all, five types of active conveying units are used, each type being used twice according to a fixed pattern in the sorting device 80. With all five types, one or two cross conveyor belts are used.

The active conveying unit 4 has already been described above with reference to figures 1, 2 and 3. The active conveying unit 81 largely corresponds to the conveying unit 4, however upright edges 83 are present on the two conveyor belts 82 thereof, which edges can move jointly with the associated conveyor belts 82. The active conveying unit 84 is a combination of the conveying unit 4 and the conveying unit 81, in the sense that the conveying unit 84 comprises a cross conveyor belt 6 not having upright edges 83 as well as a cross conveyor belt 82 having upright edges 83. The conveying unit 85 comprises only one conveyor belt 86, the width of which (i.e. seen in the direction of transport 87) is essentially twice as large as the width of the cross conveyor belts 6 or 82. The conveying unit 88 finally uses a conveyor belt 89 provided with upright edges 90, which extend substantially over the full width of the cross conveyor belt 89. The upright edges 83, 90 as described above retain a product present on the associated conveyor belt and prevent such a product from undesirably moving off the associated conveyor belt. Cylindrical products that might roll off sideways may be considered in this connection, for example.

The sorting device 100 that is shown in figure 12 comprises a conveyor consisting of two unconnected sub-conveyors 101, 102. The sub-conveyor 101 comprises alternately arranged passive conveying units 45 and active conveying units 103. The conveying units 103 are of the bomb-hatch type, comprising two supporting surfaces 104 which can tilt downwards about their outer longitudinal edges 105, as a result of which a hole is formed, via which a product present on the two supporting surfaces 104 can be discharged. The sub-conveyor 102 comprises alternately arranged passive conveying units 45 and active conveying units 106. The active conveying units comprise a supporting surface 110 fixedly connected to the associated undercarriage, along which a pusher beam 109 extending in the direction of transport 108 can be moved in a direction transverse to the direction of transport 108 by means of guides 107, so that a product present on the supporting surface 110 can be moved off the supporting surface 110. Additionally it is noted that the active conveying units 106 and 103, or more specifically the load-carrying elements thereof, not only differ in type but also in length.

It will be apparent to those skilled in the art that all kinds of variants of sorting systems are possible within the scope of the invention. By way of illustration, it is for example pointed out that also a variant of the embodiment that is shown in figure 12, in which the sub-conveyor 101 only consists of active conveying units 103 and the sub-conveyor 102 only consists of active conveying units 106, or alternately only of passive conveying units 45, falls within the scope of the present invention.

## Claims

1. A device (1, 21, 41, 60, 80, 100) for sorting products (9) while they are being conveyed in a direction of transport (3, 87, 108), said device comprising a conveyor (2, 22, 42, 101, 102) which is movable along an endless conveying path, which conveyor comprises a number of conveying units (4, 5, 45, 61-64, 81, 84, 85, 88, 105, 103, 106), each comprising an undercarriage (17, 47, 65) and at least one load-carrying element (6, 15, 66, 67, 71, 72, 82, 86, 89, 104, 110, 115) connected to the undercarriage for supporting products, wherein at least some of the load-carrying elements (6, 66, 67, 82, 86, 89, 104, 110) are movable with respect to the associated undercarriage for loading and/or unloading products onto/from the load-carrying elements, and wherein at least some of the undercarriages are coupled together, **characterized in that** load-carrying elements (6, 66, 67, 82, 86, 89, 104, 110) of a first number of load-carrying elements are movable with respect to a first number of associated undercarriages for unloading a product from a respective load-carrying element, whilst load-carrying elements (15, 115, 71, 72) of a second number of load-carrying elements are not movable with respect to a second number of associated undercarriages.

2. A device according to claim 1, **characterized in that** the movable load-carrying elements (6, 66, 67, 82, 86, 89, 104, 110) are capable either of tilting movement about at least one axis of tilt with respect to the associated undercarriages or of translating movement in a direction of translation with respect to the associated undercarriages.

3. A device according to any one of the preceding claims, **characterized in that** undercarriages associated with the load-carrying elements of both the first and the second number of load-carrying elements are provided with connecting means suitable for providing a connection with load-carrying elements of both the first and the second number of load-carrying elements.

4. A device according to claim 1, **characterized in that** the load-carrying elements of the first number of load-carrying elements have a length, seen in the direction of transport, which is different from the length of the load-carrying elements of the second number of load-carrying elements.

5. A device according to claim 4, **characterized in that** undercarriages associated with load-carrying elements of the first number of load-carrying elements have a length, seen in the direction of transport, which is different from the length of undercarriages associated with load-carrying elements of the second number of load-carrying elements.

6. A device according to claim 5, **characterized in that** the length of undercarriages associated with load-carrying elements of the first number of load-carrying elements is a multitude of the length of undercarriages associated with load-carrying elements of the second number of load-carrying elements.

7. A device according to any one of the preceding claims, **characterized in that** the length of the conveyor (2, 22, 42, 101, 102) at least substantially corresponds to the length of the endless conveying path.

8. A device according to any one of the preceding claims, **characterized in that** load-carrying elements of the first number of load-carrying elements and load-carrying elements of the second number of load-carrying elements are distributed in a regular pattern over the length of the conveyor.

9. A device according to any one of the preceding claims, **characterized in that** load-carrying elements of the first number of load-carrying elements and load-carrying elements of the second number of load-carrying elements are alternately arranged in the conveyor.

10. A device according to any one of the preceding claims, **characterized in that** load-carrying elements of the first number of load-carrying elements and load-carrying elements of the second number of load-carrying elements are arranged in groups in the conveyor.

11. A device according to any one of the preceding claims, **characterized in that** load-carrying elements of the first number of load-carrying elements and load-carrying elements of the second number of load-carrying elements arranged adjacently to each other form a closed common supporting surface also when passing through bends.

12. A device according to claim 11, **characterized in that** load-carrying elements of the first number of load-carrying elements and load-carrying elements of the second number of load-carrying elements arranged adjacently to each other abut against each other.

13. A device according to claim 12, **characterized in that** load-carrying elements (115) arranged adjacently to each other have complementally curved edges on their facing sides.

14. A device according to any one of the claims 11, 12 or 13, **characterized in that** bridging means (16) are provided between adjacent load-carrying elements, more in particular between load-carrying elements of the first number of load-carrying elements and load-carrying elements of the second number of load-carrying elements, for bridging a distance between said adjacent load-carrying elements.

15. A device according to claim 14, **characterized in that** said bridging means comprise a harmonica-like element (16).

16. A device according to claim 11, **characterized in that** adjacent load-carrying elements (19) partially overlap.

17. A device according to any one of the preceding claims, **characterized in that** moving means (51) are provided along the conveying path for moving a product off a load-carrying element.

18. A device according to claim 17, **characterized in that** a supply station (53) is provided for supplying products to the conveyor after said products have been moved off a load-carrying element, preferably by the aforesaid moving means.

## Patentansprüche

1. Gerät (1, 21, 41, 60, 80, 100) zum Sortieren von Erzeugnissen (9), während sie in einer Transportrichtung (3, 87, 108) befördert werden, wobei das Gerät ein Fördermittel (2, 22, 42, 101, 102) umfasst, das einen endlosen Förderweg entlang beweglich ist, wobei das Fördermittel eine Anzahl von Fördereinheiten (4, 5, 45,61 bis 64, 81, 84, 85, 88, 105, 103, 106) umfasst, die jede ein Fahrgestell (17, 47, 65) und zumindest ein Lastaufnahmeelement (6, 15, 66, 67, 71, 72, 82, 86, 89, 104, 110, 115) umfassen, welches zum Stützen von Erzeugnissen mit dem Fahrgestell verbunden ist, wobei zumindest einige der Lastaufnahmeelemente (6, 66, 67, 82, 86, 89, 104, 110) bezüglich des zugeordneten Fahrgestells zum Laden und/oder Entladen von Erzeugnissen auf die/von den Lastaufnahmeelementen verschiebbar sind, und wobei zumindest einige der Fahrgestelle miteinander verkuppelt sind, **dadurch gekennzeichnet, dass** Lastaufnahmeelemente (6, 66, 67, 82, 86, 89, 104, 110) einer ersten Anzahl von Lastaufnahmeelementen bezüglich einer ersten Anzahl von zugeordneten Fahrgestellen zum Entladen eines Erzeugnisses von einem jeweiligen Lastaufnahmeelement beweglich sind, während Ladeaufnahmeelemente (15, 115, 71, 72) einer zweiten Anzahl von Lastaufnahmeelementen bezüglich einer zweiten Anzahl von zugeordneten Fahrgestellen nicht beweglich sind.

2. Gerät nach Anspruch 1, **dadurch gekennzeichnet, dass** die verschiebbaren Lastaufnahmeelemente (6, 66, 67, 82, 86, 89, 104, 110) entweder zu einer Kippbewegung um zumindest eine Kippachse bezüglich der zugeordneten Fahrgestelle oder zu einer Verschiebung in einer Verschieberichtung bezüglich der zugeordneten Fahrgestelle fähig sind.

3. Gerät nach einem der vorhergehenden Ansprüche, **dadurch gekennzeichnet, dass** die Fahrgestelle, die den Lastaufnahmeelementen der ersten und der zweiten Anzahl von Lastaufnahmeelementen zugeordnet sind, mit Verbindungsmitteln versehen sind, die zum Vorsehen einer Verbindung mit Lastaufnahmeelementen der ersten und der zweiten Anzahl von Lastaufnahmeelementen geeignet sind.

4. Gerät nach Anspruch 1, **dadurch gekennzeichnet, dass** die Lastaufnahmelemente der ersten Anzahl von Lastaufnahmeelementen bei Betrachtung in der Transportrichtung eine Länge aufweisen, die sich von der Länge der Lastaufnahmelemente der zweiten Anzahl von Lastaufnahmeelementen unterscheidet.

5. Gerät nach Anspruch 4, **dadurch gekennzeichnet, dass** Fahrgestelle, die Ladeaufnahmeelementen der ersten Anzahl von Ladeaufnahmeelementen zugeordnet sind, in der Transportrichtung eine Länge aufweisen, die sich von der Länge von Fahrgestellen, die Lastaufnahmelementen der zweiten Anzahl von Lastaufnahmeelementen zugeordnet sind, unterscheidet.

6. Gerät nach Anspruch 5, **dadurch gekennzeichnet, dass** die Länge von Fahrgestellen, die Ladeaufnahmeelementen der ersten Anzahl von Ladeaufnahmeelementen zugeordnet sind, ein Vielfaches der Länge von Fahrgestellen ist, die Lastaufnahmelementen der zweiten Anzahl von Lastaufnahmeelementen zugeordnet sind.

7. Gerät nach einem der vorhergehenden Ansprüche, **dadurch gekennzeichnet, dass** die Länge des Fördermittels (2, 22, 42, 101, 102) zumindest im Wesentlichen der Länge des endlosen Förderwegs entspricht.

8. Gerät nach einem der vorhergehenden Ansprüche, **dadurch gekennzeichnet, dass** Lastaufnahmeelemente der ersten Anzahl von Lastaufnahmeelementen und Lastaufnahmeelemente der zweiten Anzahl von Lastaufnahmeelementen in einem regelmäßigen Muster über die Länge des Fördermittels verteilt sind.

9. Gerät nach einem der vorhergehenden Ansprüche, **dadurch gekennzeichnet, dass** Lastaufnahmeelemente der ersten Anzahl von Lastaufnahmeelementen und Lastaufnahmeelemente der zweiten Anzahl von Lastaufnahmeelementen abwechselnd in dem Fördermittel angeordnet sind.

10. Gerät nach einem der vorhergehenden Ansprüche, **dadurch gekennzeichnet, dass** Lastaufnahmeelemente der ersten Anzahl von Lastaufnahmeelementen und Lastaufnahmeelemente der zweiten Anzahl von Lastaufnahmeelementen in Gruppen in dem Fördermittel angeordnet sind.

11. Gerät nach einem der vorhergehenden Ansprüche, **dadurch gekennzeichnet, dass** Lastaufnahmeelemente der ersten Anzahl von Lastaufnahmeelementen und Lastaufnahmeelemente der zweiten Anzahl von Lastaufnahmeelementen, die einander benachbart angeordnet sind, eine geschlossene gemeinsame Stützfläche ausbilden, auch wenn sie Biegungen durchlaufen.

12. Gerät nach Anspruch 11, **dadurch gekennzeichnet, dass** Lastaufnahmeelemente der ersten Anzahl von Lastaufnahmeelementen und Lastaufnahmeelemente der zweiten Anzahl von Lastaufnahmeelementen, die einander benachbart angeordnet sind, aneinander anstoßen.

13. Gerät nach Anspruch 12, **dadurch gekennzeichnet, dass** Lastaufnahmeelemente (115), die einander benachbart angeordnet sind, komplementär gekrümmte Kanten an ihren gegenüberstehenden Seiten aufweisen.

14. Gerät nach einem der Ansprüche 11, 12 oder 13, **dadurch gekennzeichnet, dass** Überbrückungsmittel (16) zwischen benachbarten Lastaufnahmeelementen, insbesondere zwischen Lastaufnahmeelementen der ersten Anzahl von Lastaufnahmeelementen und Lastaufnahmeelementen der zweiten Anzahl von Lastaufnahmeelementen, zum Überbrücken eines Abstands zwischen den benachbarten Lastaufnahmeelementen vorgesehen sind.

15. Gerät nach Anspruch 14, **dadurch gekennzeichnet, dass** die Überbrückungsmittel ein harmonikaartiges Element (16) umfassen.

16. Gerät nach Anspruch 11, **dadurch gekennzeichnet, dass** sich benachbarte Lastaufnahmeelemente (19) teilweise überdecken.

17. Gerät nach einem der vorhergehenden Ansprüche, **dadurch gekennzeichnet, dass** bewegliche Mittel (51) den Förderweg entlang zum Verschieben eines Erzeugnisses von einem Lastaufnahmeelement weg vorgesehen sind.

18. Gerät nach Anspruch 17, **dadurch gekennzeichnet, dass** eine Zufuhrstation (53) zum Zuführen von Erzeugnissen zum Fördermittel nach dem Wegbewegen von Erzeugnissen von einem Lastaufnahmeelement, vorzugsweise durch das oben genannte bewegliche Mittel, vorgesehen ist.

## Revendications

1. Dispositif (1, 21, 41, 60, 80, 100) destiné à trier des produits (9) alors qu'ils sont transportés dans une direction de transport (3, 87, 108), ledit dispositif comprenant un transporteur (2, 22, 42, 101, 102) qui est mobile le long d'un trajet de transport sans fin, lequel transporteur comprend un nombre d'unités de transport (4, 5, 45, 61-64, 81, 84, 85, 88, 105, 103, 106) chacune comprenant un châssis de roulement (17, 47, 65) et au moins un élément de support de charge (6, 15, 66, 67, 71, 72, 82, 86, 89, 104, 110, 115) relié au châssis de roulement pour supporter des produits, dans lequel au moins certains des éléments de support de charge (6, 66, 67, 82, 86, 89, 104, 110) sont mobiles par rapport au châssis de roulement associé pour charger et/ou décharger des produits sur les/à partir des éléments de support de charge, et dans lequel au moins certains des châssis de roulement sont couplés ensemble, **caractérisé en ce que** les éléments de support de charge (6, 66, 67, 82, 86, 89, 104, 110) dudit premier nombre d'éléments de support de charge sont mobiles par rapport à un premier nombre de châssis de roulement associés pour décharger un produit à partir d'un élément de support de charge respectif, alors que des éléments de support de charge (15, 115, 71, 72) dudit second nombre d'éléments de support de charge ne sont pas mobiles par rapport à un second nombre de châssis de roulement associés.

2. Dispositif selon la revendication 1, **caractérisé en ce que** les éléments de support de charge mobiles (6, 66, 67, 82, 86, 89, 104, 110) sont capables d'un mouvement d'inclinaison autour d'au moins un axe d'inclinaison par rapport aux châssis de roulement associés ou d'un mouvement de translation dans une direction de translation par rapport aux châssis de roulement associés.

3. Dispositif selon l'une quelconque des revendications précédentes, **caractérisé en ce que** des châssis de roulement associés aux éléments de support de charge des premier et second nombres d'éléments de support de charge sont pourvus de moyens de connexion appropriés pour fournir une connexion à des éléments de support de charge des premier et second nombres d'éléments de support de charge.

4. Dispositif selon la revendication 1, **caractérisé en ce que** les éléments de support de charge du premier nombre d'éléments de support de charge possèdent une longueur, vue dans la direction de transport, qui est différente de la longueur des éléments de support de charge du second nombre d'éléments de support de charge.

5. Dispositif selon la revendication 4, **caractérisé en ce que** des châssis de roulement associés à des éléments de support de charge du premier nombre d'éléments de support de charge possèdent une longueur, vue dans la direction de transport, qui est différente de la longueur des châssis de roulement associés à des éléments de support de charge du second nombre d'éléments de support de charge.

6. Dispositif selon la revendication 5, **caractérisé en ce que** la longueur de châssis de roulement associés à des éléments de support de charge du premier nombre d'éléments de support de charge est une multitude de la longueur de châssis de roulement associés à des éléments de support de charge du second nombre d'éléments de support de charge.

7. Dispositif selon l'une quelconque des revendications précédentes, **caractérisé en ce que** la longueur du transporteur (2, 22, 42, 101, 102) correspond au moins sensiblement à la longueur du trajet de transport sans fin.

8. Dispositif selon l'une quelconque des revendications précédentes, **caractérisé en ce que** des éléments de support de charge du premier nombre d'éléments de support de charge et des éléments de support de charge du second nombre d'éléments de support de charge sont distribués dans une configuration régulière sur la longueur du transporteur.

9. Dispositif selon l'une quelconque des revendications précédentes, **caractérisé en ce que** des éléments de support de charge du premier nombre d'éléments de support de charge et des éléments de support de charge du second nombre d'éléments de support de charge sont agencés en alternance dans le transporteur.

10. Dispositif selon l'une quelconque des revendications précédentes, **caractérisé en ce que** des éléments de support de charge du premier nombre d'éléments de support de charge et des éléments de support de charge du second nombre d'éléments de support de charge sont agencés en groupes dans le transporteur.

11. Dispositif selon l'une quelconque des revendications précédentes, **caractérisé en ce que** des éléments de support de charge du premier nombre d'éléments de support de charge et des éléments de support de charge du second nombre d'éléments de support de charge agencés de façon adjacente les uns aux autres forment une surface de support commune fermée également lorsqu'ils passent à travers des virages.

12. Dispositif selon la revendication 11, **caractérisé en ce que** des éléments de support de charge du premier nombre d'éléments de support de charge et des éléments de support de charge du second nombre d'éléments de support de charge agencés de façon adjacente les uns aux autres prennent appui les uns contre les autres.

13. Dispositif selon la revendication 12, **caractérisé en ce que** des éléments de support de charge (115) agencés de façon adjacente les uns aux autres possèdent des bords incurvés de façon complémentaire sur leurs côtés se faisant face.

14. Dispositif selon l'une quelconque des revendications 11, 12 ou 13, **caractérisé en ce que** des moyens d'union (16) sont prévus entre des éléments de support de charge adjacents, plus particulièrement entre des éléments de support de charge du premier nombre d'éléments de support de charge et des éléments de support de charge du second nombre d'éléments de support de charge, pour couvrir une distance entre lesdits éléments de support de charge adjacents.

15. Dispositif selon la revendication 14, **caractérisé en ce que** lesdits moyens d'union comprennent un élément en forme d'harmonica (16).

16. Dispositif selon la revendication 11, **caractérisé en ce que** des éléments de support de charge adjacents (19) se chevauchent partiellement.

17. Dispositif selon l'une quelconque des revendications précédentes, **caractérisé en ce que** des moyens mobiles (51) sont prévus le long du trajet de transport pour retirer un produit d'un élément de support de charge.

18. Dispositif selon la revendication 17, **caractérisé en ce qu'**un poste d'alimentation (53) est prévu pour fournir des produits au transporteur après que lesdits produits ont été retirés d'un élément de support de charge, de préférence par les moyens mobiles susdits.
